# EUROPÄISCHE PATENTSCHRIFT

(11) **EP 1 257 454 B1**
(45) Veröffentlichungstag und Bekanntmachung des Hinweises auf die Patenterteilung: **07.01.2004**
(21) Anmeldenummer: 01994804.1
(22) Anmeldetag: 18.12.2001
(51) Int. Cl.: B60T 17/00

(54) **LUFTENTFEUCHTER FÜR PNEUMATISCHE BREMSKRAFTERZEUGER**
AIR DEHUMIDIFIER FOR PNEUMATIC BRAKE FORCE PRODUCING DEVICE
DESHUMIDIFICATEUR D'AIR POUR DISPOSITIF PNEUMATIQUE DE PRODUCTION DE FORCE DE FREINAGE

(30) Priorität: 19.12.2000 DE 10063227
(43) Veröffentlichungstag der Anmeldung: 20.11.2002
(73) Patentinhaber: KNORR-BREMSE Systeme für Schienenfahrzeuge GmbH, 80809 München (DE)
(72) Erfinder: ERNSTBERGER, Heinrich, 80469 München (DE); KERSCHER, Albert, 85386 Eching (DE); SCHUBERT, Christian, 81677 München (DE); LIMMER, Peter, 83673 Bichl (DE)
(74) Vertreter: Mattusch, Gundula
(86) Internationale Anmeldenummer: PCT/EP2001/014969
(87) Internationale Veröffentlichungsnummer: WO 2002/049898

(56) Entgegenhaltungen:
- GB-A- 352 972
- US-A- 4 707 166
- US-A- 5 190 569

## Beschreibung

Die Erfindung betrifft einen pneumatischen Bremskrafterzeuger mit mindestens einer Ansaugvorrichtung für die Umgebungsluft.

Bei einem pneumatischen Bremskrafterzeuger erfolgt beim Betätigen der Betriebsbremse ein Luftaustausch zwischen den drucklosen Räumen des pneumatischen Bremskrafterzeugers und der Umgebung.

Es sind Systeme bekannt, die die Luft aus der Umgebung unmittelbar ansaugen, wobei spezielle Ansaugelemente das Ansaugen von Staub und/oder Spritzwasser behindern.

Die Gattungsbildende GB 352972 beschreibt einen konventionallen Luftentfeuchter gemäß den Merkmalen des Oberbegriffes des unabhängigen Anspruchs 1.

Ändern sich die Umgebungsbedingungen, wie z.B. die Temperatur der Umgebungsluft, passen sich die Bauteile des Bremskrafterzeugers nur verzögert an die neuen Umgebungsbedingungen an.

Ist die angesaugte Luft beispielsweise wärmer als der pneumatische Bremskrafterzeuger, wie dies zum Beispiel beim Verlassen eines Tunnels der Fall ist, besteht die Gefahr der Kondensation der Luftfeuchtigkeit im pneumatischen Bremskrafterzeuger. Dies kann zur Korrosion innerhalb des pneumatischen Bremskrafterzeugers führen. Die Korrosion kann dabei zu Funktionsstörungen oder zum Ausfall des Bremskrafterzeugers führen.

Der vorliegenden Erfindung liegt daher die Problemstellung zugrunde, eine Vorrichtung zu schaffen, die die Gefahr der Kondensation der Luftfeuchtigkeit im Bremskrafterzeuger vermindert. Die Vorrichtung soll kostengünstig und wartungsfrei sein.

Diese Problemstellung wird mit den Merkmalen des Hauptanspruches gelöst. Dazu umfasst die Ansaugvorrichtung einen aus mindestens einer das Ansaugmedium dem Bremskrafterzeuger zuführenden Rohrleitung bestehenden Kondensator. Außerdem sind zumindest Teile der Rohrleitung in einer Zone angeordnet, die im regulären Betrieb kühler ist als die luftführenden Teile des Bremskrafterzeugers.

Die angesaugte Luft wird durch den Kondensator in den pneumatischen Bremskrafterzeuger gesaugt. In den Teilen der Rohrleitung des Kondensators, die in der kühleren Zone liegen, wird die in den Rohren geführte Luft abgekühlt. Da bei gleicher absoluter Feuchtigkeit der Luft die relative Luftfeuchtigkeit kalter Luft höher ist als die warmer Luft, kommt es im Bereich des Rohres in der kühleren Zone zur Kondensation der Luft innerhalb des Rohres. Beim Durchströmen des Rohres nähert sich die Temperatur der Luft der Temperatur der Innenwand des Rohres an. Da die luftführenden Teile des Bremskrafterzeugers im regulären Betrieb wärmer sind als die Rohrleitung, bleibt die Temperatur der Luft beim Eintritt in den Bremskrafterzeuger gleich oder sie wärmt sich auf. Hierbei bleibt die relative Luftfeuchtigkeit gleich der beim Verlassen der Ansaugvorrichtung oder sie sinkt bei Zunahme der Temperatur. Da die relative Feuchtigkeit unter dem zur Kondensation führenden Sättigungspunkt der Luft bei dieser Temperatur liegt, ist die Gefahr der Kondensation der Luft innerhalb des pneumatischen Bremskrafterzeugers stark vermindert. Durch ihren einfachen Aufbau ist diese Vorrichtung kostengünstig. Da sie keine beweglichen Teile oder Verschleißteile enthält, ist sie wartungsfrei.

Die Rohrleitung kann hierbei ein Rohr oder ein Rohrsystem sein. Der Querschnitt ist z.B. rund, elliptisch, rechteckig, polygonförmig, etc.. Die Rohrleitung kann z.B. auch einen Kanal oder einen Schlauch umfassen oder eine Kombination verschiedener Elemente sein.

Die gesamte Rohrleitung kann in der kühlen Zone angeordnet sein oder auch z.B. separat gekühlt werden.

Der Kondensator ist z.B. eine Rohrleitung, deren freies Ende die Kondensatoransaugöffnung darstellt. Das freie Ende kann in der Nähe eines wärmespeichernden Körpers enden, z.B. in der Nähe des Bodens eines nach oben offenen Behälters. innerhalb des Behälters passt sich das Temperaturprofil von oben nach unten an die Umgebungstemperatur an. Die untenliegenden kühlen Luftschichten wirken wärmeabsorbierend. Der Bereich der stärksten Kondensation ist dann der Bereich des freien Endes des Rohres.

Die Steigung der Rohrleitung ist z.B. größer als die maximale Steigung und/oder der Neigung der das Fahrzeug tragende Fahrtrasse. Das sich bei der Durchströmung des Rohres bildende Kondensat kann hierdurch unabhängig von der Fahrzeugneigung durch das Rohr abfließen. Hiermit wird die Gefahr der Kondensatansaugung vermindert.

Die Wärmeaustauschfläche des Kondensators zum äußeren Medium hin ist z.B. größer als die zur angesaugten Luft. Die Rohrleitung kann so an ihrer Außenseite auf der Temperatur des sie umgebenden wärmespeichernden Mediums gehalten werden, während sich die Temperatur der innen geführten Luft an diese Temperatur annähert. Das Kühlmedium kann statt Luft auch ein anderes Gas oder eine Flüssigkeit sein.

Die Rohrleitung besteht z.B. aus einem korrosionsfesten Werkstoff.

Weitere Einzelheiten der Erfindung ergeben sich aus den Unteransprüchen und der nachfolgenden Beschreibung einer schematisch dargestellten Ausführungsform.

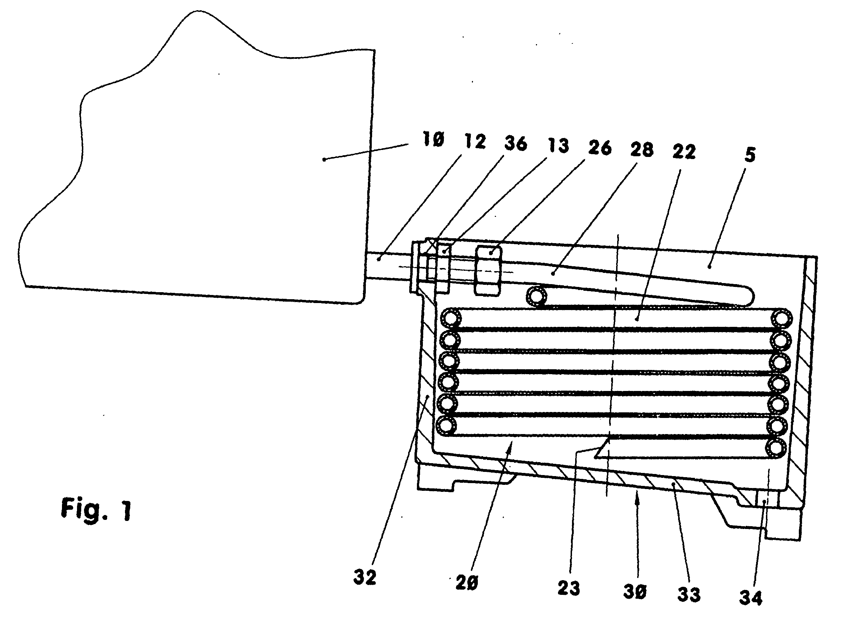

- Figur 1:: Vorrichtung zur Reduzierung der Feuchtigkeit der Ansaugluft an einem Bremskrafterzeuger.

Figur 1 zeigt einen pneumatischen Bremskrafterzeuger (10) mit einer Ansaugvorrichtung (20) für den Luftaustausch beim Betätigen der Bremse zwischen den drucklosen Räumen des Bremskrafterzeugers (10) und der Umgebung (5). Die Ansaugvorrichtung (20) umfasst eine Rohrwendel (22), über die z.B. Luft aus der Umgebung (5) in den Bremskrafterzeuger (10) angesaugt wird. Die Rohrwendel (22) sitzt in einem nach oben offenen Behälter (30).

Die Rohrwendel (22) ist z.B. eine senkrecht angeordnete schraubenförmig gewundene Rohrleitung konstanten Querschnitts. Sie hat unten ein freies Ende (23), das eine Ansaugöffnung umfasst. Etwa acht Rohrwindungen liegen übereinander. Der Durchmesser der Rohrwendel (22) beträgt in den unteren sechs Rohrwindungen beispielsweise ca. das 16fache des Rohrdurchmessers. Diese Rohrwindungen haben eine konstante Steigung von etwa des 1,25fachen Durchmessers pro Rohrwindung.

Der Durchmesser der obersten anderthalb Rohrwindungen beträgt etwa 60% des Rohrwendeldurchmessers. Oben geht die Wendel (22) in ein gerades Rohrstück (28) über, das mit Hilfe einer Rohrverschraubung (26) mit dem Ansaugstutzen (12) des Bremskrafterzeugers (10) verbunden ist.

In der Nähe der Rohrverschraubung (26) ist der Ansaugstutzen (12) in einer Durchgangsbohrung (36) des Behälters (30) mit einer Verschraubung (13) befestigt.

Der Behälter (30) hat einen annährend zylindrischen Mantel (32), der sich nach oben hin auf etwa drei Viertel seiner unteren Wandstärke verjüngt. Der Mantel (32) ist um etwa 20% höher als die Rohrwendel (22). Der Boden (33) des Behälters (30) hat etwa die Stärke des oberen Randes des Mantels (32) und fällt zu einer Seite hin ab. Das Gefälle entspricht über die in Figur 1 dargestellte Breite etwa der zweifache Stärke des Bodens (33). In Figur 1 ist der tieferliegende Teil des Bodens (33) an der dem Bremskrafterzeuger (10) abgewandten Seite des Behälters (30) angeordnet.

In diesem Bereich des Bodens (33) ist eine beispielsweise vertikale Durchgangsbohrung (34) angeordnet, die auf der Innenseite des Behälters (30) angesenkt ist. Der Durchmesser dieser Bohrung (34) entspricht etwa dem Durchmesser des Rohres der Rohrwendel (22).

Während der Fahrt des Fahrzeuges wird die Luft für den Bremskrafterzeuger (10) durch die Rohrwendel (22) aus der Umgebung (5) angesaugt.

Bei langer Fahrt mit normalen, durchschnittlichen Bremsungen in gleichbleibender Umgebungstemperatur hat die Rohrwendel (22) eine unwesentlich niedrigere Temperatur als die luftführenden Teile des Bremskrafterzeugers (10) angenommen. Durch die sporadische Betätigung des Bremskrafterzeugers (10) liegt die Temperatur der luftführenden Teile des Bremskrafterzeugers (10) i.d.R. zwangsläufig über der Temperatur der das Fahrzeug umgebenden Luft. Der Innen- und der Außenbereich des Bremskrafterzeugers (10) haben annähernd dieselbe Temperatur. Beim Ansaugen des Mediums bleibt wegen der gleichbleibenden Temperatur des Mediums die relative Luftfeuchtigkeit annähernd konstant. Die Feuchtigkeit der Luft kondensiert somit nicht an den Wänden der Rohrwendel (22) oder an den Innenwandungen der luftführenden Teile des Bremskrafterzeugers (10).

Bei einer Fahrt von einem wärmeren Gebiet in ein kühleres, z.B. bei der Einfahrt in einen Tunnel, sinkt die Temperatur der angesaugten Umgebungsluft (5) schneller als die Temperatur des Bremskrafterzeugers (10) und der Rohrwendel (22). Die nun angesaugte kältere Luft kann nur eine geringere Menge Feuchtigkeit aufnehmen als die Luft im warmen Bremskrafterzeuger (10). Beim Eintritt in den Kondensator (22) und den Bremskrafterzeuger (10) wird die Luft erwärmt. Hierbei sinkt ihre relative Feuchtigkeit. In diesem unkritischen Fall bildet sich kein Kondensat.

Fährt das Fahrzeug dagegen von einem kühleren Gebiet in ein wärmeres, wie z.B. bei der Ausfahrt aus einem Tunnel, bei Talfahrten im Gebirge oder bei Einfahrten in Gebäude oder Fabrikhallen, erwärmt sich die Umgebungsluft (5) schneller als das Innere des Bremskrafterzeugers (10) und die Rohrwendel (22). Die Feuchtigkeitsmenge in der warmen Umgebungsluft (5) ist jetzt höher gegenüber der in der kälteren Luft im Bremskrafterzeuger (10). Beim Durchströmen der kühlen Rohrwendel (22) wird die angesaugte Luft abgekühlt. Die relative Luftfeuchtigkeit überschreitet hierbei den Sättigungspunkt. Ein Teil der Luftfeuchtigkeit kondensiert an den Innenwänden der Rohrwendel (22). Die Feuchtigkeitsmenge in der Luft nimmt ab. Durch die ansteigende Anordnung der Wendel (22) fließt das sich bildende Kondensat in den Behälter (30) ab und dort durch die Öffnung (34) nach außen. Im Ausführungsbeispiel ist wegen seiner vor Fahrtwind geschützten Lage der kühlste Punkt des Kondensators (22) das freie Ende (23). Hier findet die stärkste Kondensation statt. Die Kondensation nimmt somit entlang des Kondensators (22) vom freien Ende (23) zum Ansaugstutzen (12) des Bremskrafterzeugers (10) ab.

Um Korrosion zu vermeiden, kann die Rohrwendel (22) aus einem korrosionsarmen Stahl, z.B. X 5 CrNi 18 9, ausgeführt sein.

Während des Durchströmens der Wendel (22) nähert sich die Temperatur der Luft asymptotisch der Wendeltemperatur. Da die äußere Wärmeaustauschfläche der Wendel (22) größer ist als die innere, behält die äußere Wandfläche der Rohrwendel (22) annähernd die Temperatur des sie umgebenden wärmespeichernden Behälters (30).

Der Behälter (30) ist beispielsweise aus Gusswerkstoff gefertigt. Dieser bildet einen die Rohrwendel (22) umgebenden wärmespeichernden Körper. Innerhalb des Behälters (30) ist die kälteste Zone im Bereich des Bodens (33). In dieser Zone ist der Temperaturanstieg der Luft verzögert gegenüber der Umgebung.

### Bezugszeichenliste

- 5: Umgebung, Umgebungsluft
- 10: Bremskrafterzeuger
- 12: Ansaugstutzen
- 13: Verschraubung
- 20: Ansaugvorrichtung
- 22: Rohrwendel, Rohrleitung, Kondensator
- 23: freies Ende
- 26: Rohrverschraubung
- 28: gerades Rohrstück
- 30: Behälter
- 32: Seitenwand, Mantel
- 33: Boden
- 34: Durchgangsbohrung in (33)
- 36: Durchgangsbohrung in (32)

## Patentansprüche

1. Pneumatischer Bremskrafterzeuger (10) mit mindestens einer Ansaugvorrichtung (20) für die Umgebungsluft (5), **dadurch gekennzeichnet,**
- **dass** die Ansaugvorrichtung (20) einen aus mindestens einer die Ansaugluft dem Bremskrafterzeuger (10) zuführenden Rohrleitung (22) bestehenden Kondensator zum Auskondensieren von Luftfeuchtigkeit umfasst,
- **dass** zumindest Teile der Rohrleitung (22) in einer Zone angeordnet sind, die im regulären Fahrbetrieb kühler sind als die dem Kondensator nachgeschalteten, luftführenden Teile des Bremskrafterzeugers (10).

2. Pneumatischer Bremskrafterzeuger nach Anspruch 1, **dadurch gekennzeichnet, dass** die Rohrleitung (22) ein freies Ende (23) umfasst und dass der Rohrleitung (22) zumindest im Bereich des freien Endes (23) durch einen wärmespeichernden Körper Wärme entzogen wird.

3. Pneumatischer Bremskrafterzeuger nach Anspruch 1, **dadurch gekennzeichnet, dass** die Steigung der Rohrleitung (22) vom freien Ende (23) zum Bremskrafterzeuger (10) größer ist als die maximale Steigung und/oder Neigung der das Fahrzeug tragenden Fahrtrasse.

4. Pneumatischer Bremskrafterzeuger nach Anspruch 1, **dadurch gekennzeichnet, dass** die Wärmeaustauschfläche des Kondensators mit dem äußeren Medium größer ist als mit dem inneren Medium.

5. Pneumatischer Bremskrafterzeuger nach Anspruch 1, **dadurch gekennzeichnet, dass** die Rohrleitung (22) aus einem korrosionsbeständigen Werkstoff beste ht.

6. Pneumatischer Bremskrafterzeuger nach Anspruch 1, **dadurch gekennzeichnet, dass** zumindest Teile der Rohrleitung (22) einschließlich des freien Endes (23) innerhalb eines mit mindestens einer im Bodenbereich angeordneten Öffnung (34) versehenen Behälters (30) angeordnet sind.

## Claims

1. Pneumatic brake force producing device (10) comprising at least one aspirator device (20) for taking in ambient air (5), **characterised in**
**that** said aspirator device (20) comprises a condenser consisting of at least one pipe (22) supplying the aspirated air to said brake force producing device (10) for eliminating humidity by condensation,
**that** at least parts of said pipe (22) are disposed in a zone that is cooler in regular running operation than those air-supplying parts of said brake force producing device (10), which are disposed downstream of said condenser.

2. Pneumatic brake force producing device according to Claim 1, **characterised in**
**that** said pipe (22) comprises a free end (23) and that at least in the region of said free end (23) heat is removed from said pipe (22) by means of a heat-accumulating body.

3. Pneumatic brake force producing device according to Claim 1, **characterised in**
**that** the inclination of said pipe (22) from the free end (23) to the brake force producing device (10) is steeper than the maximum slope and/or inclination of the running trace supporting the vehicle.

4. Pneumatic brake force producing device according to Claim 1, **characterised in**
**that** the surface of said condenser for heat exchange with the outside medium is larger than the surface for heat exchange with the inside medium.

5. Pneumatic brake force producing device according to Claim 1, **characterised in**
**that** said pipe (22) is made of a corrosion-resistant material.

6. Pneumatic brake force producing device according to Claim 1, **characterised in**
**that** at least parts of said pipe (22), inclusive of said free end (23) are disposed within a reservoir (30) provided with at least one opening (34) disposed in the bottom zone.

## Revendications

1. Dispositif pneumatique générateur d'un effort de freinage (10) comprenant au moins un dispositif aspirateur (20) pour l'admission de l'air ambiante (5), **caractérisé en ce**
**que** ledit dispositif aspirateur (20) comprend un condenseur composé d'au moins une conduite (22) alimentant ledit air aspiré vers le dispositif générateur d'un effort de freinage (10) afin d'éliminer de l'humidité par condensation,
et en ce qu'au moins des parties de ladite conduite (22) sont disposées dans une zone, qui est plus fraîche en état de marche régulière que ceux parties d'alimentation de l'air dudit dispositif générateur d'un effort de freinage (10), qui sont disposés en aval dudit condenseur.

2. Dispositif pneumatique générateur d'un effort de freinage selon la revendication 1, **caractérisé en ce**
**que** ladite conduite (22) comprend une extrémité libre (23) et qu'au moins dans la zone de ladite extrémité libre (23), de la chaleur est enlevée de ladite conduite (22) moyennant un corps accumulateur thermique.

3. Dispositif pneumatique générateur d'un effort de freinage selon la revendication 1, **caractérisé en ce**
**que** l'inclinaison de ladite conduite (22) à partir de l'extrémité libre (23) vers le dispositif générateur d'un effort de freinage (10) est plus forte que la pente et/ou inclinaison maximale du tracé de parcours, sur lequel se déplace le véhicule.

4. Dispositif pneumatique générateur d'un effort de freinage selon la revendication 1, **caractérisé en ce**
**que** l'aire dudit condenseur pour l'échange thermique avec le milieu extérieur est plus grande que l'aire d'échange thermique avec le milieu intérieur.

5. Dispositif pneumatique générateur d'un effort de freinage selon la revendication 1, **caractérisé en ce**
**que** ladite conduite (22) est produite d'un matériau résistant à la corrosion.

6. Dispositif pneumatique générateur d'un effort de freinage selon la revendication 1, **caractérisé en ce**
**qu'**au moins des parties de ladite conduite (22), y compris ladite extrémité libre (23), sont disposées à l'intérieur d'un réservoir (30) muni d'au moins une ouverture (34) formée dans la zone de fond.
